(19) Europäisches Patentamt
European Patent Office
Office européen des brevets

(11) **EP 3 498 404 B1**

(12) **EUROPÄISCHE PATENTSCHRIFT**

(45) Veröffentlichungstag und Bekanntmachung des Hinweises auf die Patenterteilung:
**30.11.2022 Patentblatt 2022/48**

(21) Anmeldenummer: **17207033.6**

(22) Anmeldetag: **13.12.2017**

(51) Internationale Patentklassifikation (IPC):
**B23B 3/00** (2006.01)    **B23Q 5/40** (2006.01)
**B23Q 15/013** (2006.01)

(52) Gemeinsame Patentklassifikation (CPC):
**B23B 3/00; B23Q 5/40; B23Q 15/013;**
B23Q 2705/102; B23Q 2705/182

(54) **LEIT- UND ZUGSPINDELDREHMASCHINE**

GUIDANCE AND PRODUCTION LATHE

TOUR PARALLÈLE À CHARIOTER ET À FILETER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.06.2019 Patentblatt 2019/25**

(73) Patentinhaber: **GDW Werkzeugmaschinen GmbH**
**91315 Höchstadt a. d. Aisch (DE)**

(72) Erfinder: **ORT, Hans**
**91413 Neustadt/Aisch (DE)**

(74) Vertreter: **Dr. Gassner & Partner mbB**
**Wetterkreuz 3**
**91058 Erlangen (DE)**

(56) Entgegenhaltungen:
**EP-A1- 0 416 553     EP-A2- 0 418 213**
**DE-A1- 4 314 391     DE-C- 909 528**
**DE-U1- 8 816 401     DE-U1-202010 012 713**
**US-A- 4 506 570     US-A1- 2012 073 413**

**Beschreibung**

Die Erfindung betrifft eine herkömmliche Leit- und Zugspindeldrehmaschine, welche einen auf einem Maschinenbett in einer z-Richtung manuell hin und her bewegbaren Hauptschlitten sowie einen auf dem Hauptschlitten in einer senkrecht zur z-Richtung verlaufenden x-Richtung manuell hin und her bewegbaren Planschlitten umfasst. Ferner ist ein erster Antrieb mit einem ersten Motor vorgesehen, welcher über ein erstes Getriebe mit einer Hauptspindel verbunden oder verbindbar ist. - Eine solche herkömmliche Leit- und Zugspindeldrehmaschine ist nach dem Stand der Technik allgemein bekannt.

Von herkömmlichen Leit- und Zugspindeldrehmaschinen sind sogenannte CNC-Drehmaschinen abzugrenzen, wie sie beispielsweise aus der US 4,983,899 oder der EP 1 203 632 A2 bekannt sind. Bei CNC-Drehmaschinen sind der Haupt- und der Planschlitten nicht manuell bewegbar. Hier erfolgen die Bewegungen des Haupt- und Planschlittens mittels nummerisch gesteuerter elektrischer Antriebe. Die EP 0 418 213 A2 offenbart eine Leit- und Zugspindeldrehmaschine, welche einer herkömmlichen Leit- und Zugspindeldrehmaschine nachempfunden ist. Hier werden der Haupt- und der Planschlitten mit separaten Elektromotoren bewegt. Die Steuerung der Motoren erfolgt über Handräder, welche herkömmlichen Handrädern herkömmlicher Haupt- und Planschlitten nachempfunden sind. Die "elektronischen Handräder" sind im Gegensatz zu herkömmlichen Handrädern nicht mechanisch mit dem Maschinenbett bzw. dem Hauptschlitten gekoppelt.

Die DE 20 2010 012 713 U1 offenbart eine Drehmaschine mit einer Leit- und Zugspindel und einer elektronischen Steuerung. Mittels der elektronischen Steuerung kann der Zugspindelantrieb bei Erreichen eines Endpositionswerts abgeschaltet werden. Zur Erkennung des Endpositionswerts ist ein Messsystem zur Erfassung der aktuellen Positionen des Haupt- und des Planschlittens vorgesehen.

Die EP 0 416 553 A1 offenbart eine Leit- und Zugspindeldrehmaschine, umfassend einen auf einem Maschinenbett in einer z-Richtung manuell hin- und her bewegbaren Hauptschlitten sowie einen auf dem Hauptschlitten in einer senkrecht zur z-Richtung verlaufenden x-Richtung manuell hin- und her bewegbaren Planschlitten, einen ersten Antrieb mit einem ersten Motor, welcher über ein erstes Getriebe mit einer Hauptspindel verbunden oder verbindbar ist, einen zweiten Antrieb mit einem zweiten Motor, welcher über ein zweites Getriebe mit einer Leit- und/oder einer Zugspindel verbunden oder verbindbar ist, eine erste Drehwinkelerfassungseinrichtung zur Erfassung eines ersten Drehwinkels des ersten Antriebs oder der Hauptspindel, eine zweite Drehwinkelerfassungseinrichtung zur Erfassung eines zweiten Drehwinkels des zweiten Antriebs oder der Leit- und/oder Zugspindel, und eine mit dem ersten und zweiten Antrieb sowie der ersten und zweiten Drehwinkelerfassungseinrichtung verbundene Steuerung, welche so hergerichtet ist, dass damit eine erste Drehbewegung der Hauptspindel mit einer zweiten Drehbewegung der Leitspindel gemäß einer vorgegebenen Übersetzung koppelbar ist.

Bei herkömmlichen Drehmaschinen werden zum Gewindeschneiden die Haupt- und die Leitspindel mittels eines Getriebes mechanisch gekoppelt. Das Vorsehen eines solchen Getriebes ist aufwändig und teuer. Abgesehen davon erfordert die Auswahl und die Einstellung einer geeigneten Übersetzung zwischen der Haupt- und der Leitspindel Fachkenntnis und Erfahrung.

Aufgabe der Erfindung ist es, die Nachteile nach dem Stand der Technik zu beseitigen. Es soll insbesondere eine möglichst einfach und kostengünstig herstellbare herkömmliche Leit- und Zugspindeldrehmaschine angegeben werden, welche in vereinfachter Weise das Schneiden von Gewinden ermöglicht.

Diese Aufgabe wird durch die Merkmale des Patentanspruchs 1 gelöst. Zweckmäßige Ausgestaltungen der Erfindung ergeben sich aus den Merkmalen der abhängigen Patentansprüche.

Im Sinne der vorliegenden Erfindung wird unter einem "manuell hin und her bewegbaren" Haupt- bzw. Planschlitten ein Schlitten verstanden, welcher mittels eines mit dem Maschinenbett mittelbar oder unmittelbar mechanisch gekoppelten Handrads bewegbar ist. Die mechanische Kopplung mit dem Maschinenbett erfolgt über ein Getriebe, im Falle einer mittelbaren Kopplung zusätzlich unter Zwischenschaltung eines Schlittens, beispielsweise des Hauptschlittens.

Erfindungsgemäß sind Drehwinkelerfassungseinrichtungen zur Erfassung eines ersten Drehwinkels der Hauptspindel sowie eines zweiten Drehwinkels der Leitspindel vorgesehen. Die Drehwinkel können unmittelbar an der Haupt- oder der Leitspindel oder auch mittelbar an den ihnen zugeordneten ersten und zweiten Antrieben erfasst werden. Sowohl die Antriebe als auch die Drehwinkelerfassungseinrichtungen sind mit einer Steuerung verbunden. Bei der Steuerung kann es sich beispielsweise um einen Computer handeln. Erfindungsgemäß ist nun vorgesehen, dass mittels der Steuerung der erste und der zweite Antrieb gemäß einer vorgegebenen Übersetzung gekoppelt werden kann. D. h. die Hauptspindel wird mit dem ersten Antrieb mit einer ersten konstanten Winkelgeschwindigkeit angetrieben. Die Leitspindel wird mit dem zweiten Antrieb entsprechend der vorgegebenen Übersetzung im Verhältnis zur ersten Winkelgeschwindigkeit mit einer zweiten Winkelgeschwindigkeit angetrieben. Die Übersetzung gibt das Verhältnis zwischen der ersten und der zweiten Winkelgeschwindigkeit wieder. Erfindungsgemäß sind also die Haupt- und die Leitspindel nicht mittels eines mechanischen Getriebes gekoppelt, sondern mittels zweier durch die Steuerung gesteuerter Antriebe. Die Übersetzung wird mittels der Steuerung nach Eingabe der Gewindesteigung durch den Benutzer berechnet. Es ist nicht mehr erforderlich, eine geeignete Übersetzung bei einem mechanischen Getriebe einzurichten. Das vereinfacht das Handling und verkürzt die Rüstzeit. Die Weglassung eines mechanischen Getriebes zur Kopplung der Haupt- und der Leitspindel vereinfacht den Aufbau der Drehmaschine. Es können Herstellungskosten eingespart werden.

Nach einer vorteilhaften Ausgestaltung ist das erste Getriebe ein mehrstufig schaltbares Getriebe. Das erste Getriebe kann beispielsweise 2 bis 24 Schaltstufen aufweisen. Damit ist es auf einfache Weise möglich, die erste Drehbewegung der Hauptspindel stufenweise einzustellen und damit vorzugeben. Der Schaltzustand des Getriebes kann ebenfalls von der Steuerung erfasst und zur Einstellung der gewünschten Übersetzung verarbeitet werden.

Nach einer weiteren vorteilhaften Ausgestaltung umfasst das zweite Getriebe eine wahlweise mit der Leitspindel koppelbare Schlossmutter. Eine solche wahlweise koppelbare Schlossmutter ist nach dem Stand der Technik bei herkömmlichen Drehmaschinen bekannt. Damit ist es möglich, die Leitspindel wahlweise mit dem zweiten Antrieb zu koppeln.

Die Steuerung kann eine Regeleinrichtung zum Betreiben des ersten Motors mit zumindest einer vorgegebenen Drehzahl umfassen. Die Drehzahl kann fest vorgegeben sein. Es kann aber auch sein, dass die Regeleinrichtung so ausgestaltet ist, dass der erste Motor wahlweise mit mehreren unterschiedlichen vorgegebenen Drehzahlen betreibbar ist. Auch damit ist es möglich, die erste Drehbewegung der Hauptspindel stufenweise einzustellen. Die stufenweise Einstellung der Drehbewegung der Hauptspindel mittels der Regeleinrichtung kann mit der stufenweisen Einstellung des ersten Getriebes kombiniert werden.

Erfindungsgemäß ist die Steuerung zum Ausführen eines Gewindeschneidmodus hergerichtet, bei dem mittels eines vorgegebenen Algorithmus in Abhängigkeit einer benutzerseitig vorgegebenen Gewindesteigung eine dazu korrespondierende Übersetzung zwischen der Haupt- und der Leitspindel eingestellt wird. Die Steuerung umfasst ein manuell zu bedienendes erstes Schaltmittel zum Aktivieren der Übersetzung. Bei der erfindungsgemäßen Drehmaschine muss die Bedienungsperson zum Herstellen eines Gewindes lediglich das Schneidwerkzeug bezüglich des Werkstücks in eine geeignete Position manuell durch Bewegen des Haupt- und/oder Planschlittens, ggf. eines zusätzlich vorgesehenen Oberschlittens, einstellen, nachfolgend in der Steuerung den Gewindeschneidmodus auswählen und die gewünschte Gewindesteigung eingeben. Sodann kann durch Bedienen des ersten Schaltmittels die zur eingegebenen Gewindesteigung korrespondierende Übersetzung aktiviert werden. In diesem Fall laufen sodann beispielsweise beide Antriebe an. Es ist aber auch denkbar, dass beide Antriebe bereits laufen und nach Aktivierung der Übersetzung der Hauptschlitten mittels der Schlossmutter in die Leitspindel eingekoppelt wird.

Erfindungsgemäß umfasst die Steuerung ein Anzeigemittel zum Anzeigen des Vorliegens und des Nichtvorliegens der Übersetzung. Die gewünschte Übersetzung wird üblicherweise kurz nach Einschalten der beiden Antriebe erreicht. Das Vorliegen der Übersetzung kann beispielsweise durch ein grünes Leuchtmittel dem Benutzer angezeigt werden. Im Falle einer Fehlfunktion oder des Nichtvorliegens der Übersetzung kann das dem Benutzer beispielsweise durch ein rotes Leuchtmittel angezeigt werden. Damit kann der Benutzer den Zeitpunkt, beispielsweise für das Einkoppeln der Schlossmutter, erkennen.

Nach einer weiteren vorteilhaften Ausgestaltung kann die Steuerung zum Ausführen eines Vorschubmodus hergerichtet sein, bei dem die erste und die zweite Drehbewegung entkoppelt sind und die zweite Drehbewegung der Leitspindel in Abhängigkeit einer benutzerseitig eingegebenen Vorschubgeschwindigkeit einstellbar ist. Das ermöglicht eine Bewegung des Hauptschlittens mit der vorgegebenen Vorschubgeschwindigkeit. Dabei kann die Hauptspindel stillstehen oder mit einer vorgegebenen ersten Drehbewegung rotieren. Der Hauptschlitten kann entweder mittels der Leitspindel oder auch mit der Zugspindel bewegt werden, welche vorteilhafterweise mittels des zweiten Getriebes mit der Leitspindel mechanisch gekoppelt ist.

Zweckmäßigerweise umfasst die Steuerung ein Eingabemittel zum Eingeben der Gewindesteigung oder der Vorschubgeschwindigkeit. Die Steuerung kann ferner ein Display zur Anzeige der eingegebenen Gewindesteigung oder der eingegebenen Vorschubgeschwindigkeit umfassen. Es kann sich dabei beispielsweise um ein LCD-Display handeln. Das Eingabemittel kann ein Drehregler, ein Ziffernblock oder dgl. sein.

Nach einer weiteren Ausgestaltung umfasst die Steuerung ein zweites Schaltmittel zur Wahl einer Drehrichtung der Leitspindel. Die vorgeschlagene Steuerung weist wenige Eingabe- und Schaltmittel auf. Sie lässt sich besonders einfach bedienen.

Nach einer weiteren besonders vorteilhaften Ausgestaltung umfasst die Steuerung einen Drehwinkelspeicher zur wahlweisen Speicherung zweier zweiter Drehwinkel sowie eine Drehwinkelsubtraktionseinrichtung zur Ermittlung einer Drehwinkeldifferenz zwischen den beiden zweiten Drehwinkeln. Damit ist es auf einfache Weise möglich, eine gewünschte Vorschublänge einzustellen. Zur Übergabe der Drehwinkel an die Steuerung sind zweckmäßigerweise dritte Schaltmittel, beispielsweise Tasten, vorgesehen. Zur Übergabe eines Drehwinkels stellt der Benutzer beispielsweise das Werkzeug zunächst in z-Richtung auf einen gewünschten Anfangspunkt und übergibt diesen Anfangspunkt-Drehwinkel durch Druck auf eine Anfangspunkt-Speichertaste an die Steuerung. Sodann wird das Werkzeug an den gewünschten Endpunkt mittels des zweiten Antriebs verfahren. Der dazu korrespondierende Endpunkt-Drehwinkel wird durch Druck auf eine Endpunkt-Speichertaste an den Drehwinkelspeicher übergeben. Durch eine Subtraktion zwischen dem Anfangspunkt-Drehwinkel und dem Endpunkt-Drehwinkel wird mittels der Steuerung die gewünschte Vorschublänge ermittelt. Sodann wird das Werkzeug auf den Anfangspunkt zurückgefahren, die gewünschte Zustellung des Werkzeugs eingestellt und nachfolgend der Hauptschlitten in z-Richtung zum Endpunkt mittels der Leitspindel bewegt, wobei die Hauptspindel mit einer vorgegebenen Übersetzung rotieren kann.

Nach einer vereinfachten Ausgestaltung ist es auch möglich, lediglich den Endpunkt-Drehwinkel durch Druck auf die Endpunkt-Speichertaste in den Drehwinkelspeicher zu übergeben. Anschließend wird der Hauptschlitten mittels des zweiten Antriebs auf einen gewünschten Anfangspunkt verfahren. Bei Auslösen des Gewindeschneid- oder Vorschubmodus erfolgt dann eine automatische Subtraktion zwischen dem aktuellen Anfangspunkt-Drehwinkel und dem gespeicherten Endpunkt-Drehwinkel. Das Werkzeug wird durch den zweiten Antrieb soweit in z-Richtung verfahren bis der Endpunkt-Drehwinkel erreicht ist. Sodann wird der zweite Antrieb abgeschaltet. Bei dieser vereinfachten Ausgestaltung genügt also das Vorsehen einer einzigen Endpunkt-Speichertaste sowie einer Einrichtung zum automatischen Auslesen des Anfangspunkt-Drehwinkels sowie eine Drehwinkelsubtraktionseinrichtung.

Nachfolgend werden Ausführungsbeispiele der Erfindung anhand der Zeichnungen näher erläutert. Es zeigen:

Fig. 1    eine schematische Darstellung der Leit- und Zugspindeldrehmaschine und

Fig. 2    eine schematische Darstellung der Steuerung.

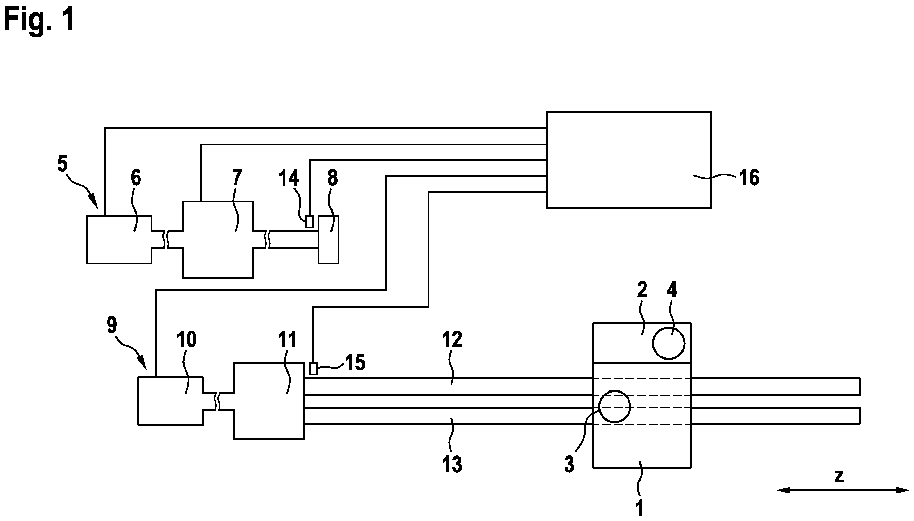

Fig. 1 zeigt schematisch eine Leit- und Zugspindeldrehmaschine. Auf einem (hier nicht gezeigten) Maschinenbett ist ein in einer z-Richtung manuell hin und her bewegbarer Hauptschlitten 1 abgestützt. Auf dem Hauptschlitten 1 ist ein Planschlitten 2 abgestützt, welcher in einer zur z-Richtung senkrechten x-Richtung manuell hin und her bewegbar ist. Die x-Richtung verläuft hier senkrecht zur Papierebene. Zum manuellen Bewegen des Hauptschlittens 1 ist ein erstes Handrad 3 und zum manuellen Bewegen des Planschlittens 2 ein zweites Handrad 4 vorgesehen. Bei einer Betätigung des ersten 3 und des zweiten Handrads 4 werden die korrespondierenden Schlitten 1, 2 ausschließlich mechanisch, d. h. ohne Zwischenschaltung elektrischer Antriebe, bewegt.

Das Bezugszeichen 5 bezeichnet einen ersten Antrieb mit einem ersten Motor 6, welcher über ein erstes Getriebe 7 mit einer Hauptspindel 8 verbunden ist. Das Bezugszeichen 9 bezeichnet einen zweiten Antrieb, welcher einen zweiten Motor 10 umfasst, welcher über ein zweites Getriebe 11 mit einer Leitspindel 12 sowie einer Zugspindel 13 verbunden ist. Der erste 7 und/oder das zweite Getriebe 11 können Kupplungen umfassen, so dass eine Verbindung zwischen den Antrieben 5, 9 sowie der Hauptspindel 8 bzw. der Leit- 12 und der Zugspindel 13 wahlweise getrennt werden können.

Eine erste Drehwinkelerfassungseinrichtung 14 ist zur Erfassung eines ersten Drehwinkels der Hauptspindel 8 vorgesehen. Eine zweite Drehwinkelerfassungseinrichtung 15 ist zur Erfassung eines zweiten Drehwinkels der Leitspindel 12 vorgesehen. Eine Steuerung 16, beispielsweise ein Computer, ist mit dem ersten Antrieb 5, dem zweiten Antrieb 9, der ersten Drehwinkelerfassungseinrichtung 14, der zweiten Drehwinkelerfassungseinrichtung 15 sowie optional mit dem ersten Getriebe 7 verbunden.

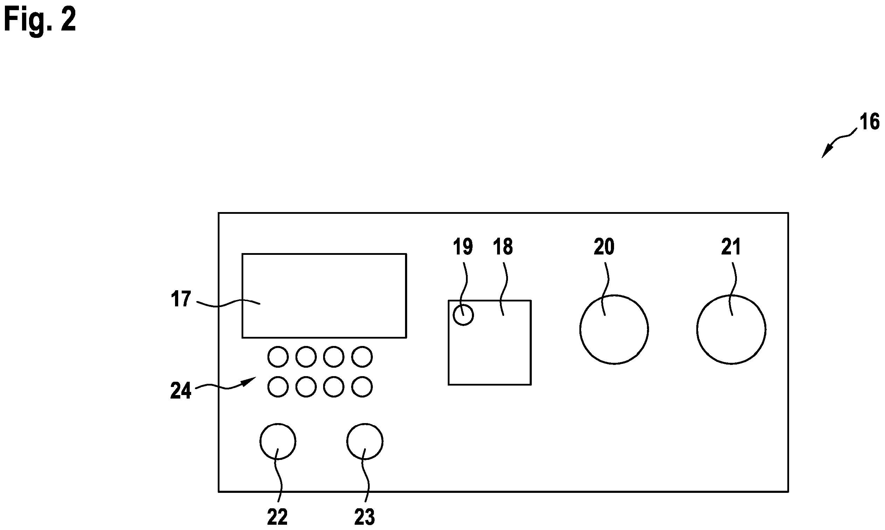

Fig. 2 zeigt ein Ausführungsbeispiel der Steuerung 16. Dabei umfasst die Steuerung 16 ein Display 17, beispielsweise ein LCD-Display. Mit dem Bezugszeichen 18 ist ein erstes Schaltmittel zum Aktivieren einer Übersetzung U bezeichnet. Ein Anzeigemittel 19, z. B. eine LED, zum Anzeigen des Vorliegens und Nichtvorliegens der Übersetzung U ist hier in das erste Schaltmittel 18 integriert. Mit dem Bezugszeichen 20 ist ein Eingabemittel zum Eingeben einer Gewindesteigung oder Vorschubgeschwindigkeit bezeichnet. Es kann sich dabei um ein Potentiometer oder dgl. handeln. Das Bezugszeichen 21 bezeichnet ein zweites Schaltmittel zur Wahl einer Drehrichtung der Leitspindel 12.

Eine erste Taste 22 dient der Übergabe eines Anfangspunkt-Drehwinkels. Eine zweite Taste 23 dient der Übergabe eines Endpunkt-Drehwinkels an die Steuerung 16. Die weiteren allgemein mit dem Bezugszeichen 24 bezeichneten Funktionstasten dienen dem Auslösen oder Einstellen weiterer Funktionen, beispielsweise einer Wahl des Gewindeschneidmodus oder des Vorschubmodus, einer Wahl der Gewindeart, beispielsweise metrisch, Zoll, Modul usw., einer Wahl der automatischen Endpunkt-Abschaltung und dgl.

Die Funktion der Leit- und Zugspindeldrehmaschine ist Folgende:
Die Leit- und Zugspindeldrehmaschine kann wahlweise in einem Gewindeschneidmodus oder in einem Vorschubmodus betrieben werden. Sofern einer der vorgenannten Modi gewünscht wird, kann das über die Funktionstasten 24 an der Steuerung 16 eingestellt werden.

Gewindeschneidmodus:

Bei Anwahl des Gewindeschneidmodus übergibt der Benutzer zunächst durch Betätigung des Eingabemittels 20 die gewünschte Gewindesteigung an die Steuerung. Die Gewindesteigung wird im Display 17 angezeigt. Mittels der Steuerung 16 wird in Abhängigkeit in der vom Benutzer eingegebenen Gewindesteigung die Übersetzung U berechnet. Es gilt:

$$U = \omega 1 / \omega 2,$$

wobei

$\omega 1$    die erste Winkelgeschwindigkeit und
$\omega 2$    die zweite Winkelgeschwindigkeit

sind.

Sodann wird durch manuelle Betätigung des Haupt- 1 und/oder Planschlittens 2 das Schneidwerkzeug bezüglich des zu bearbeitenden Werkstücks (hier nicht gezeigt) in eine geeignete Position verfahren. Anschließend wird durch Betätigen des ersten Schaltmittels 18, beispielsweise durch Druck auf eine Taste, der Gewindeschneidmodus ausgelöst. Der erste 6 und der zweite Motor 10 werden von der Steuerung 16 so angesteuert, dass sie konstante Drehbewegungen ausführen.

Sobald nach dem Anlaufen des ersten 6 und des zweiten Motors 10 die Übersetzung U erreicht ist, wird das durch das Anzeigemittel 19 dem Benutzer angezeigt. Er kann dann beispielsweise die Schlossmutter einkoppeln, so dass der Hauptschlitten 1 mit der zum Gewindeschneiden gemäß der eingegebenen Gewindesteigung geeigneten Vorschubgeschwindigkeit bewegt wird.

Vorschubmodus:

Bei Anwahl des Vorschubmodus können die Winkelgeschwindigkeiten ω1, ω2 der Hauptspindel 8 sowie der Leit- 12 und/oder der Zugspindel 13 unabhängig voneinander eingestellt werden. Die erste Winkelgeschwindigkeit ω1 der Hauptspindel 8 ergibt sich im Falle eines schaltbaren ersten Getriebes 7 durch die Wahl des Gangs. Ferner kann der erste Motor 6 mittels einer in der Steuerung 16 vorgesehenen Regelung (hier nicht gezeigt) auch mit unterschiedlichen Drehzahlen betrieben werden.

Zur Einstellung der Vorschubgeschwindigkeit des Hauptschlittens 1 wird mittels der Funktionstasten 24 der Vorschubmodus angewählt. Sodann kann mit dem Einstellmittel 20 die gewünschte Vorschubgeschwindigkeit eingegeben werden. Die eingegebene Vorschubgeschwindigkeit wird auf dem Display 17 angezeigt.

Vorschublänge:

Zur Einstellung einer gewünschten Vorschublänge ist es möglich, zweite Drehwinkel der Leitspindel 12 zu speichern und aus der Differenz der gespeicherten Drehwinkel eine Vorschublänge zu berechnen. Dazu kann beispielsweise wie folgt vorgegangen werden: Zunächst stellt der Benutzer das Schneidwerkzeug auf einen Anfangspunkt ein. Durch Druck auf die erste Taste 22 wird der zum Anfangspunkt korrespondierende Anfangspunkt-Drehwinkel gespeichert. Sodann verfährt der Benutzer mittels der Leitspindel 12 bzw. der Zugspindel 13 den Hauptschlitten soweit, bis das Werkzeug den gewünschten Endpunkt erreicht. Durch Betätigung der zweite Taste 23 wird der zum Endpunkt korrespondierende Endpunkt-Drehwinkel an die Steuerung übergeben. Aus einer Subtraktion des Endpunkt-Drehwinkels und des Anfangspunkt-Drehwinkels ergibt sich ein Differenzdrehwinkel. Daraus kann wiederum die Vorschublänge ermittelt werden.

Beim Erreichen des Endpunkt-Drehwinkels kann der erste Motor 6 und/oder der zweite Motor 10 gestoppt werden. Bereits vor Erreichen des Endpunkt-Drehwinkels können die Winkelgeschwindigkeiten des ersten Motors 6 und/oder des zweiten Motors 10 in vorgegebener Weise vermindert werden, so dass eine sanfte Endpunkt-Abschaltung erfolgt.

Bezugszeichenliste

| 1 | Hauptschlitten |
|---|---|
| 2 | Planschlitten |
| 3 | erstes Handrad |
| 4 | zweites Handrad |
| 5 | erster Antrieb |
| 6 | erster Motor |
| 7 | erstes Getriebe |
| 8 | Hauptspindel |
| 9 | zweiter Antrieb |
| 10 | zweiter Motor |
| 11 | zweites Getriebe |
| 12 | Leitspindel |
| 13 | Zugspindel |
| 14 | erste Drehwinkelerfassungseinrichtung |
| 15 | zweite Drehwinkelerfassungseinrichtung |
| 16 | Steuerung |
| 17 | Display |
| 18 | erstes Schaltmittel |
| 19 | Anzeigemittel |
| 20 | Eingabemittel |
| 21 | zweites Schaltmittel |
| 22 | erste Taste |
| 23 | zweite Taste |
| 24 | Funktionstasten |

**Patentansprüche**

**1.** Leit- und Zugspindeldrehmaschine, umfassend

einen auf einem Maschinenbett in einer z-Richtung manuell hin- und her bewegbaren Hauptschlitten (1) sowie einen auf dem Hauptschlitten (1) in einer senkrecht zur z-Richtung verlaufenden x-Richtung manuell hin- und her bewegbaren Planschlitten (2), wobei zum manuellen Bewegen des Hauptschlittens (1) ein erstes Handrad (3) und zum manuellen Bewegen des Planschlittens (2) ein zweites Handrad (4) vorgesehen ist, wobei bei einer Betätigung des ersten (3) und des zweiten Handrads (4) die korrespondierenden Schlitten (1, 2) ausschließlich mechanisch, nämlich ohne Zwischenschaltung elektrischer Antriebe, bewegt werden, einen ersten Antrieb (5) mit einem ersten Motor

(6), welcher über ein erstes Getriebe (7) mit einer Hauptspindel (8) verbunden oder verbindbar ist,

einen zweiten Antrieb (9) mit einem zweiten Motor (10), welcher über ein zweites Getriebe (11) mit einer Leit- (12) und/oder einer Zugspindel (13) verbunden oder verbindbar ist,

eine erste Drehwinkelerfassungseinrichtung (14) zur Erfassung eines ersten Drehwinkels des ersten Antriebs (5) oder der Hauptspindel (8),

eine zweite Drehwinkelerfassungseinrichtung (15) zur Erfassung eines zweiten Drehwinkels des zweiten Antriebs (9) oder der Leit- (12) und/oder Zugspindel (13), und

eine mit dem ersten (5) und zweiten Antrieb (9) sowie der ersten (14) und zweiten Drehwinkelerfassungseinrichtung (15) verbundene Steuerung (16), welche so hergerichtet ist, dass damit eine erste Drehbewegung der Hauptspindel (8) mit einer zweiten Drehbewegung der Leitspindel (12) gemäß einer vorgegebenen Übersetzung koppelbar ist,

wobei die Steuerung (16) zum Ausführen eines Gewindeschneidmodus hergerichtet ist, bei dem mittels eines vorgegebenen Algorithmus in Abhängigkeit einer benutzerseitig vorgegebenen Gewindesteigung eine dazu korrespondierende Übersetzung zwischen der Haupt- (8) und der Leitspindel (12) eingestellt wird,

wobei die Steuerung (16) ein manuell zu bedienendes erstes Schaltmittel (18) zum Aktivieren der Übersetzung umfasst, und

wobei die Steuerung (16) ein Anzeigemittel (19) zum Anzeigen des Vorliegens und Nichtvorliegens der Übersetzung umfasst.

2. Leit- und Zugspindeldrehmaschine nach Anspruch 1, wobei das erste Getriebe (7) ein mehrstufig schaltbares Getriebe ist.

3. Leit- und Zugspindeldrehmaschine nach einem der vorhergehenden Ansprüche, wobei das erste Getriebe (7) 2 bis 24 Schaltstufen aufweist.

4. Leit- und Zugspindeldrehmaschine nach einem der vorhergehenden Ansprüche, wobei das zweite Getriebe (11) eine wahlweise mit der Leitspindel (12) koppelbare Schlossmutter umfasst.

5. Leit- und Zugspindeldrehmaschine nach einem der vorhergehenden Ansprüche, wobei die Steuerung (16) eine Regeleinrichtung zum Betreiben des ersten Motors (6) mit zumindest einer vorgegebenen Drehzahl umfasst.

6. Leit- und Zugspindeldrehmaschine nach einem der vorhergehenden Ansprüche, wobei die Regeleinrichtung so ausgestaltet ist, dass der erste Motor (6) wahlweise mit mehreren unterschiedlichen vorgegebenen Drehzahlen betreibbar ist.

7. Leit- und Zugspindeldrehmaschine nach einem der vorhergehenden Ansprüche, wobei die Steuerung (16) zum Ausführen eines Vorschubmodus hergerichtet ist, bei dem die erste und die zweite Drehbewegung entkoppelt sind und die zweite Drehbewegung der Leitspindel (12) in Abhängigkeit einer benutzerseitig eingegebenen Vorschubgeschwindigkeit einstellbar ist.

8. Leit- und Zugspindeldrehmaschine nach einem der vorhergehenden Ansprüche, wobei die Steuerung (16) ein Eingabemittel (20) zum Eingeben der Gewindesteigung oder der Vorschubgeschwindigkeit umfasst.

9. Leit- und Zugspindeldrehmaschine nach einem der vorhergehenden Ansprüche, wobei die Steuerung (16) ein Display (17) zur Anzeige der eingegebenen Gewindesteigung oder der eingegebenen Vorschubgeschwindigkeit umfasst.

10. Leit- und Zugspindeldrehmaschine nach einem der vorhergehenden Ansprüche, wobei die Steuerung (16) ein zweites Schaltmittel (21) zur Wahl einer Drehrichtung der Leitspindel (12) umfasst.

11. Leit- und Zugspindeldrehmaschine nach einem der vorhergehenden Ansprüche, wobei die Steuerung (16) einen Drehwinkelspeicher zur wahlweisen Speicherung zweier zweiter Drehwinkel sowie eine Drehwinkelsubtraktions-Einrichtung zur Ermittlung einer Drehwinkeldifferenz zwischen den beiden zweiten Drehwinkeln umfasst.

**Claims**

1. A lathe with a lead screw (12) and a drawing spindle (13), comprising

   a main slide (1) movable back and forth manually on a machine bed in a z-direction and a cross slide (2) movable back and forth manually on the main slide (1) in an x-direction, which runs perpendicularly to the z-direction, wherein for a manual movement of the main slide (1) a first handwheel (3) is provided, wherein for a manual movement of the cross slide (2) a second handwheel (4) is provided, wherein, if the first handwheel (3) and the second handwheel (4) are actuated, the corresponding slides (1, 2) are moved exclusively mechanically, i. e. without interpositioning of electric drives,
   a first drive (5) with a first motor (6) which is connected or can be connected via a first gearing (7) to a main spindle (8),

a second drive (9) with a second motor (10) which is connected or can be connected via a second gearing (11) to a lead screw (12) and/or a drawing spindle (13),

a first rotary angle detection device (14) for detecting a first rotary angle of the first drive (5) or the main spindle (8),

a second rotary angle detection device (15) for detecting a second rotary angle of the second drive (9) or the lead screw (12) and/or the drawing spindle (13), and

a controller (16) connected to the first drive (5) and the second drive (9) and also the first (14) and second rotary angle detection device (15), which controller is designed such that a first rotary movement of the main spindle (8) can be coupled with a second rotary movement of the lead screw (12) in accordance with a predefined gear ratio,

wherein the controller (16) is designed to perform a thread-cutting mode in which a gear ratio between the main spindle (8) and the lead screw (12) corresponding to a thread pitch predefined by a user is set by means of a predefined algorithm depending on said thread pitch,

wherein the controller (16) comprises a first switch means (18) to be operated manually for activating the gear ratio and

wherein the controller (16) comprises a display means (19) for displaying the presence and the absence of the gear ratio.

2. The lathe according to claim 1, wherein the first gearing (7) is a gearing shiftable in a number of stages.

3. The lathe according to any one of the preceding claims, wherein the first gearing (7) has 2 to 24 shift stages.

4. The lathe according to any one of the preceding claims, wherein the second gearing (11) comprises a screw-cutting nut that can be selectively coupled to the lead screw (12).

5. The lathe according to any one of the preceding claims, wherein the controller (16) comprises a closed-loop control unit for operating the first motor (6) at least at a predefined rotary speed.

6. The lathe according to any one of the preceding claims, wherein the closed-loop control unit is designed such that the first motor (6) can be operated selectively with a number of different predefined rotary speeds.

7. The lathe according to any one of the preceding claims, wherein the controller (16) can be designed to perform a feed mode, in which the first and the second rotary movement are uncoupled and the second rotary movement of the lead screw (12) can be adjusted depending on a feed rate input by the user.

8. The lathe according to any one of the preceding claims, wherein the controller (16) comprises an input means (20) for inputting the thread pitch or the feed rate.

9. The lathe according to any one of the preceding claims, wherein the controller (16) comprises a display (17) for displaying an input thread pitch or the feed rate.

10. The lathe according to any one of the preceding claims, wherein the controller (16) comprises a second switch means (21) for selecting a direction of rotation of the lead screw (12).

11. The lathe according to any one of the preceding claims, wherein the controller (16) comprises a rotary angle memory for selectively storing two second rotary angles and a rotary angle subtraction device for determining a rotary angle difference between the two second rotary angles.

**Revendications**

1. Tour parallèle à charioter et à fileter comprenant

un chariot principal (1) pouvant être déplacé manuellement dans un sens z sur un banc de machine ainsi qu'un chariot transversal (2) pouvant être déplacé manuellement dans un sens x perpendiculaire au sens z sur le chariot principal (1), en ce qu'un premier volant (3) est prévu pour le déplacement manuel du chariot principal (1) et un deuxième volant (4) pour le déplacement manuel du chariot transversal (2), en ce que les chariots (1, 2) correspondants à actionnement du premier (3) et du deuxième volant (4) se déplacent uniquement mécaniquement, à savoir sans intercaler des entraînements électriques, un premier entraînement (5) avec un premier moteur (6) lequel est relié ou peut être relié à une broche principale (8) par l'intermédiaire d'une première transmission (7), un deuxième entraînement (9) avec un deuxième moteur (10) lequel est relié ou peut être relié à une vis-mère (12) et/ou à une broche de chariotage (13) par l'intermédiaire d'une deuxième transmission (11), un premier dispositif de détection d'angle de rotation (14) destiné à la détection d'un premier angle de rotation du premier entraînement (5) ou de la broche principale (8),
un deuxième dispositif de détection d'angle de rotation (15) destiné à la détection d'un deuxième angle de rotation du deuxième entraînement (9) ou de la vis-mère (12) et/ou de la broche de chariotage (13), et
une commande (16) reliée au premier (5) et au deuxième entraînement (9) ainsi qu'au premier (14) et au deuxième dispositif de détection d'angle de rotation (15), ladite commande étant conçue de manière à ce qu'elle permette de coupler un premier mouvement de rotation de la broche principale (8) avec un deuxième mouvement de rotation de la vis-mère (12) selon un rapport de transmission prédéfini,
en ce que la commande (16) est conçue pour exécuter un mode de taraudage dans lequel un rapport de transmission correspondant entre la broche principale (8) et la vis-mère (12) est réglé au moyen d'un algorithme prédéfini en fonction d'un pas de vis prédéfini par l'utilisateur,
en ce que la commande (16) comprend un premier moyen de commutation (18) à commande manuelle pour activer le rapport de transmission, et
en ce que la commande (16) comprend un moyen d'affichage (19) pour afficher la présence et l'absence du rapport de transmission.

2. Tour parallèle à charioter et à fileter selon la revendication 1, en ce que la première transmission (7) est une transmission commutable multirapport.

3. Tour parallèle à charioter et à fileter selon l'une des revendications précédentes, en ce que la première transmission (7) comporte 2 à 24 rapports de transmission.

4. Tour parallèle à charioter et à fileter selon l'une des revendications précédentes, en ce que la deuxième transmission (11) comporte un écrou embrayable de la vis-mère qui peut être couplée sélectivement avec la vis-mère (12).

5. Tour parallèle à charioter et à fileter selon l'une des revendications précédentes, en ce que la commande (16) comporte un dispositif de réglage destiné au fonctionnement du premier moteur (6) à au moins une vitesse de rotation prédéfinie.

6. Tour parallèle à charioter et à fileter selon l'une des revendications précédentes, en ce que le dispositif de réglage est conçu de manière à ce que le premier moteur (6) soit exploitable sélectivement à plusieurs vitesses de rotation définies différentes.

7. Tour parallèle à charioter et à fileter selon l'une des revendications précédentes, en ce que la commande (16) est conçue pour effectuer un mode d'avance, dans lequel le premier et le deuxième mouvement de rotation sont découplés et le deuxième mouvement de rotation de la vis-mère (12) est réglable en fonction d'une vitesse d'avance entrée par l'utilisateur.

8. Tour parallèle à charioter et à fileter selon l'une des revendications précédentes, en ce que la commande (16) comporte un moyen d'entrée (20) destiné à l'entrée du pas de vis ou de la vitesse d'avance.

9. Tour parallèle à charioter et à fileter selon l'une des revendications précédentes, en ce que la commande (16) comporte un affichage (17) destiné à l'affichage du pas de vis entré ou de la vitesse d'avance entrée.

10. Tour parallèle à charioter et à fileter selon l'une des revendications précédentes, en ce que la commande (16) comporte un deuxième moyen de commutation (21) destiné à la sélection d'un sens de rotation de la vis-mère (12).

11. Tour parallèle à charioter et à fileter selon l'une des revendications précédentes, en ce que la commande (16) comporte une mémoire d'angle de rotation destinée à l'enregistrement sélectif de deux deuxièmes angles de rotation ainsi qu'un dispositif de soustraction d'angle de rotation servant à déterminer une différence d'angle de rotation entre les deux deuxièmes angles de rotation.

EP 3 498 404 B1

**Fig. 1**

EP 3 498 404 B1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4983899 A
- EP 1203632 A2
- EP 0418213 A2
- DE 202010012713 U1
- EP 0416553 A1